# FASCICULE DE BREVET EUROPEEN

(11) **EP 4 348 993 B1**
(45) Date de publication et mention de la délivrance du brevet: **19.02.2025**
(21) Numéro de dépôt: 22732918.2
(22) Date de dépôt: 24.05.2022
(51) Int. Cl.: H04M 1/04, F16M 13/00, F16M 11/38, F16M 11/28, F16M 11/20, F16M 11/08, F16M 11/04, F16M 13/02

(54) **SUPPORT POUR UN SMARTPHONE ET PROCÉDÉ DE MONTAGE CORRESPONDANT**
HALTERUNG FÜR EIN SMARTPHONE UND ENTSPRECHENDES MONTAGEVERFAHREN
HOLDER FOR A SMARTPHONE AND CORRESPONDING MOUNTING METHOD

(30) Priorité: 31.05.2021 FR 2105695
(43) Date de publication de la demande: 10.04.2024
(73) Titulaire: Lumasia, 06670 SAINT-BLAISE (FR)
(72) Inventeur: MAGGIOLINI, Franck, 06670 SAINT-BLAISE (FR)
(74) Mandataire: Loyer & Abello
(86) Numéro de dépôt international: PCT/EP2022/064120
(87) Numéro de publication internationale: WO 2022/253651

(56) Documents cités:
- WO-A1-2014/015769
- US-A- 5 720 465
- US-A1- 2018 363 837

## Description

### Domaine technique

L'invention se rapporte au domaine des accessoires de bureau. Plus précisément, elle se rapporte à un support de smartphone, stable et réglable à la main, qui permet de surélever le smartphone par rapport à la table et d'observer à distance grâce au smartphone la copie d'une personne en train d'écrire.

### Arrière-plan technologique

La demanderesse fournit des services d'enseignement à distance utilisant les communications électroniques. Sa vision est d'aider des élèves et des enseignants qui peuvent difficilement se déplacer afin de permettre l'activité d'enseignement à distance avec un suivi visuel et personnel des activités écrites des élèves par des enseignants.

La demanderesse se donne une mission sociale et l'équipement qu'elle propose à ses élèves, techniquement parlant, doit être minimal, simple d'utilisation et bon marché. Partant du constat que le smartphone est devenu un équipement banal permettant de transmettre des images animées, la demanderesse suppose que les élèves en sont équipés et elle a conçu tout un dispositif à installer chez l'élève, organisé autour d'un smartphone.

Ce dispositif permet de reproduire les conditions de l'enseignement en classe dans une large mesure. Il permet des échanges, un dialogue entre l'élève et l'enseignant, où les deux se voient mais surtout, il permet que l'enseignant observe la copie de l'élève pendant qu'il écrit, ce qui est essentiel pédagogiquement et qui distingue la solution de téléenseignement à base de ce dispositif des solutions actuelles.

Le terme de smartphone est devenu aussi usité que l'appareil qu'il désigne. En Français, on pourrait le traduire par « tablette électronique miniature ». Cependant « smartphone » est compris de tous, sans ambiguïté et plus bref que l'équivalent français. C'est pourquoi nous avons retenu ce terme dans la présente demande.

La demanderesse envisage que l'élève dispose son smartphone dans un plan horizontal, au-dessus de sa copie, assez haut pour que le smartphone filme toute la copie ou au moins une partie importante de celle-ci. L'élève met en route une application de visioconférence du smartphone qui filme et transmet simultanément les images filmées et permet aussi de dialoguer à distance, grâce au système de communication du smartphone.

La demanderesse envisage aussi que l'élève dispose son smartphone dans un plan vertical face à l'élève et que le smartphone devienne alors un outil de visioconférence à proprement parler, de dialogue face-à-face.

La demanderesse a songé dans un premier temps avoir recours à des produits existants comme support de smartphone. Elle a trouvé un produit qui, plus que les autres, semblait correspondre à son besoin (visible sur l'internet à l'adresse https://www.fnac.com/mp41373513/Support-telephone-mobile-Smartphone-pour-scan ner-de-photos à la date du dépôt de la présente demande) et destiné à photographier et numériser des documents posés sur une table. Le support trouvé consiste en un socle formé de trois barres métalliques disposées comme les trois côtés d'un rectangle ; une perche verticale s'élève à partie du milieu de la barre centrale et se règle en inclinaison à la base pour déplacer l'objectif du smartphone au-dessus de la zone voulue ; la perche est télescopique et se règle à la hauteur voulue en faisant coulisser la partie mâle supérieure dans la partie femelle inférieure ; une pince emmanchée au sommet de la perche, enserre le smartphone ; elle peut être démontée et remontée en sorte de présenter le smartphone dans un plan horizontal ou vertical.

Cependant, à l'expérience, la demanderesse s'est aperçue que ce produit est inapte à l'usage recherché. Il n'est pas pratique de devoir démonter puis remonter la pince pour changer le plan du smartphone en cours de leçon. La perche a tendance à s'effondrer lorsqu'elle est inclinée. La pince du smartphone n'est pas bien fixée en rotation autour de sa liaison avec la perche, ce qui engendre un manque de stabilité et rend difficile de placer le smartphone dans la position souhaitée.

On trouve aussi dans l'état de l'art les demandes D1 - WO 2014/015769 A1, D2 - US 2018/0363837 A1 et D3 - US 5 720 465 A1.

Les demandes D1 et D2 divulguent un support de smartphone comportant deux barres horizontales ou plus à la base, une jambe verticale en haut de laquelle est placé le smartphone. Cependant dans le support de smartphone selon D1 la perche est placée à l'extrémité des barres horizontales, ce qui entraîne des déséquilibres. Le support n'est pas démontable ou montable à la main. Dans D2, le smartphone est placé sur une perche flexible ce qui oblige à rechercher une position d'équilibre.

La demande D3 divulgue un dispositif destiné à supporter des livres dans sa variante principale. Le moyen de fixation de l'objet, livre ou smartphone, est complexe. Il couvre le smartphone sur les bords et risque d'occulter l'objectif de la caméra.

La demanderesse a donc conçu l'invention objet de la présente demande pour remédier à ces inconvénients.

### Résumé

Un but de l'invention est de procurer un appareil stable. Une idée à la base de l'invention est de procurer un socle formé de deux barres qu'on écarte de sorte que le smartphone se retrouve entre elles, ce qui donne son équilibre à l'ensemble du support et du smartphone. Une autre idée à la base de l'invention et contribuant à la stabilité de l'ensemble du support et du smartphone est que la jambe au sommet de laquelle est placé le smartphone reste à la verticale. Un autre but de l'invention est qu'elle permette de placer le smartphone dans deux plans possibles, vertical et horizontal, et de faire pivoter le smartphone dans le plan où il est placé. Une idée à la base de l'invention est d'utiliser des organes de vissage (par exemple, un filetage traversant un trou lisse et aboutissant dans un taraudage où il est vissé) comme axes de rotation. Un autre but de l'invention est de procurer un appareil simple d'utilisation et réglable à la main. Un autre but de l'invention est de procurer un appareil bon marché.

Selon un premier objet, l'invention procure un support pour un smartphone comprenant :
- un socle comprenant deux barres disposées horizontalement, une barre inférieure et une barre supérieure pourvue d'une première extrémité surélevée au moyen d'un pied et d'une deuxième extrémité montée pivotante sur la barre inférieure autour d'un axe,
- une jambe verticale, fixée de manière amovible dans le tiers central de la barre supérieure, percée de part en part d'un premier trou dans une partie haute, suivant une horizontale perpendiculaire à la barre supérieure,
- une partie supérieure comprenant :
   - un adaptateur, percé d'un premier taraudage et relié à la jambe verticale par un organe de vissage, traversant le premier trou et vissé dans le premier taraudage, l'organe de vissage déterminant un axe de rotation autour duquel l'adaptateur est monté pivotant sur la partie haute de la jambe verticale,
   - un moyen pour fixer un smartphone, monté sur l'adaptateur

Selon des modes de réalisation, un tel support peut comporter une ou plusieurs des caractéristiques suivantes.

Selon un mode de réalisation, l'adaptateur est percé de part en part d'un deuxième trou perpendiculaire au premier taraudage qui n'atteint pas le deuxième trou et le moyen pour fixer un smartphone est une pince ayant un fond percé d'un second taraudage, monté sur l'adaptateur par un deuxième organe de vissage à la main passant dans le deuxième trou, vissé dans le second taraudage et déterminant un axe de rotation autour duquel la pince est montée pivotante.

Selon un mode de réalisation, l'adaptateur est un parallélépipède rectangle.

Ainsi, la liaison de l'adaptateur avec les pièces voisines se fait par une surface plane qui permet une surface de contact maximale.

Selon un mode de réalisation, la partie haute est un parallélépipède rectangle.

Ainsi, la liaison de la partie haute avec les pièces voisines se fait par une surface plane qui permet une surface de contact maximale.

Selon un mode de réalisation, un joint est placé entre la partie haute et l'adaptateur.

Ainsi, la partie haute et l'adaptateur peuvent être serrés sans que leur surface de contact soit endommagée.

Selon un mode de réalisation, la barre inférieure est configurée pour passer sous la barre supérieure en pivotant autour de l'axe.

Ainsi, on peut écarter les barres de l'angle qui permet le meilleur équilibre. On peut aussi faire passer la barre inférieure d'un côté à l'autre de la barre supérieure et obtenir ainsi un réglage pour gaucher ou pour droitier, respectivement.

Selon un mode de réalisation, la barre inférieure présente des bords biseautés sur sa longueur

Cela permet à la personne en train d'écrire de faire passer sa feuille par-dessus la barre inférieure, par glissement.

Selon un mode de réalisation, la jambe verticale comprend
- une partie femelle fixée de manière amovible sur le socle dans le tiers central de la barre supérieure, percée de part-en-part en plusieurs points régulièrement espacés de perçages d'un diamètre identique,
- une partie mâle s'emboîtant dans la partie femelle, ayant une base dans laquelle est taillée une encoche,
- une goupille configurée pour traverser un perçage quelconque de la partie femelle et sur laquelle repose l'encoche.

Ainsi, la hauteur du smartphone devient réglable. Cela permet de s'adapter à la focale de la caméra du smartphone et d'améliorer la netteté de l'image.

Selon un mode de réalisation, le matériau du support appartient à un groupe comprenant le plastique et le bois.

Ainsi, le matériau peut être choisi en fonction des avantages recherchés.

Selon un second objet, l'invention procure aussi un procédé de montage d'un support de smartphone selon l'invention, comprenant les opérations de :
- disposer une première barre horizontalement
- disposer une deuxième barre horizontalement sur la première barre, la deuxième barre étant surélevée au moyen d'un pied au niveau d'une première extrémité
- monter pivotante autour d'un axe une deuxième extrémité de la deuxième barre sur la première barre
- fixer verticalement de manière amovible sur le tiers central de la deuxième barre unejambe verticale, la jambe verticale étant percée de part en part d'un premier trou dans une partie haute, trou qu'on place suivant une horizontale perpendiculaire à la deuxième barre,
- relier à la jambe verticale un adaptateur percé d'un premier taraudage, par un organe de vissage apte à être vissé à la main, traversant le premier trou (5a) et vissé dans le premier taraudage, l'organe de vissage déterminant un axe de rotation
- monter l'adaptateur pivotant autour du dit axe de rotation sur la partie haute de la jambe verticale,
- monter sur l'adaptateur un moyen de fixation du smartphone.

Selon un mode de réalisation du second objet, l'adaptateur est percé de part en part d'un deuxième trou perpendiculaire au premier taraudage qui n'atteint pas le deuxième trou, le moyen pour fixer un smartphone est une pince ayant un fond percé d'un second taraudage ; et le procédé comprend à la fin l'opération de monter la dite pince sur l'adaptateur par un deuxième organe de vissage à la main passé dans le deuxième trou, vissé dans le second taraudage et déterminant un axe de rotation autour duquel la pince est montée pivotante.

Selon un mode de réalisation du second objet, les opérations de montage sont réalisées à la main.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] La [Fig.1] représente une vue d'ensemble du support en perspective, sans la partie supérieure.
[Fig.2] La [Fig.2] représente l'adaptateur vu de côté.
[Fig.3] La [Fig.3] est une vue de devant du support avec le smartphone disposé dans un plan horizontal.
[Fig.4] La [Fig.4] est une vue de devant du support avec le smartphone disposé dans un plan vertical et une orientation paysage.
[Fig.5] La [Fig.5] est une vue du support avec le smartphone disposé dans un plan horizontal, dans une configuration pour gaucher.
[Fig.6] La [Fig.6] représente le support selon l'invention en pièces détachées.

### Description des modes de réalisation

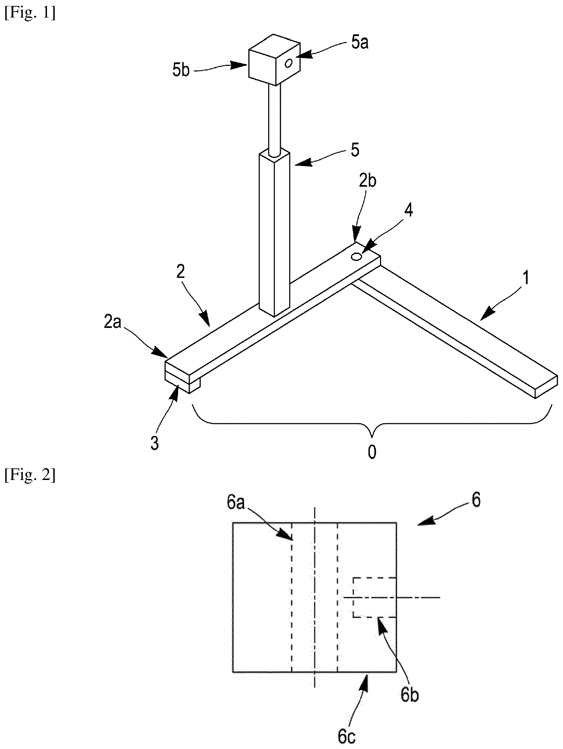

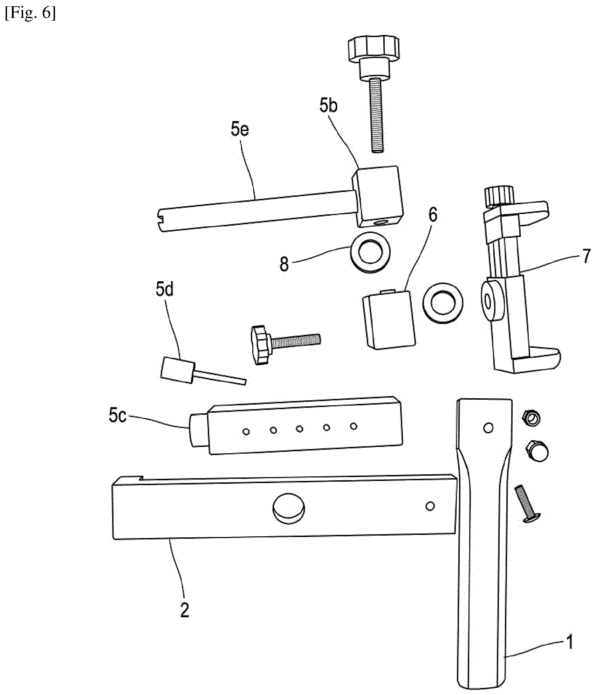

Le support selon l'invention se compose de trois parties : un socle 0, une jambe verticale 5, une partie supérieure. La [Fig.1] représente une vue d'ensemble d'un mode de réalisation du support monté, sans la partie supérieure. La [Fig.6] représente un mode de réalisation du support en pièces détachées et permet de distinguer toutes les pièces. C'est probablement sous cette forme que le support sera distribué. La barre inférieure 1 et la barre supérieure 2 seront assemblées avant envoi pour éviter à l'utilisateur d'avoir à recourir à un outil.

Le socle 0 est lui-même formé de deux barres, une barre inférieure 1 et une barre supérieure 2. La barre supérieure 2 est supportée à une extrémité 2a par un pied 3 et à l'autre 2b par la barre inférieure 1. Les deux barres sont reliées par une vis à capuchon 4 associée à un boulon, traversant la barre supérieure 2 vers son extrémité 2b.

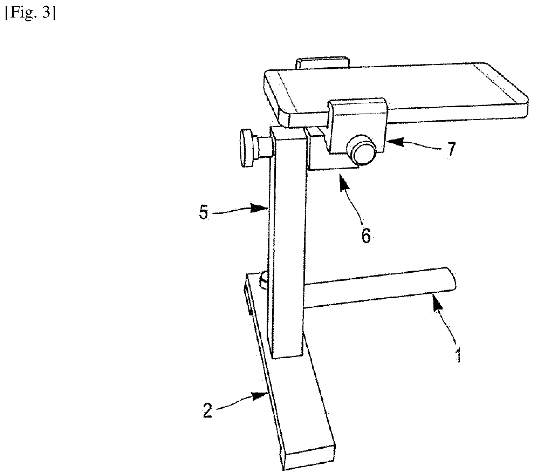

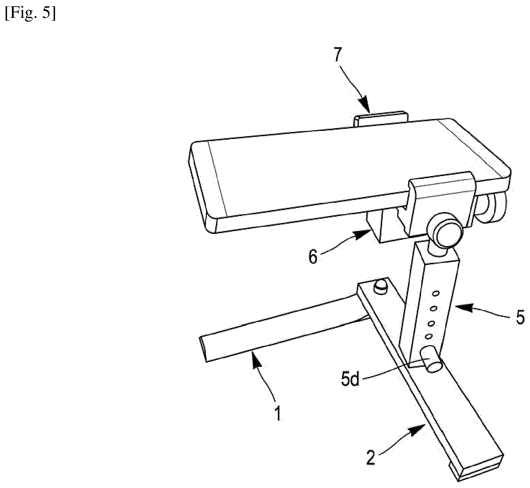

La barre inférieure 1 pivote autour de l'axe que forme la vis 4 et peut ainsi se placer d'un côté ou de l'autre de la barre supérieure 2, permettant d'adapter le support aux droitiers, comme sur la [Fig.3], ou aux gauchers, comme sur la [Fig.5]. Lorsqu'il s'agit de ranger le support, on peut avantageusement loger la barre inférieure 1 sous la barre supérieure 2.

La barre inférieure 1 est biseautée sur sa longueur, des deux côtés, ce qui permet lorsqu'on écrit sur une feuille placée devant la barre inférieure 1 de faire glisser la feuille par-dessus (le biseautage n'est pas représenté sur la [Fig.1]).

La jambe verticale 5 est montée sur la barre supérieure 2, vers le milieu de la barre supérieure 2, au moyen d'un tourillon. Elle est facile à monter ou démonter à la main par emboitement. La jambe verticale 5 possède une partie haute 5b, traversée de part en part par un trou 5a qui suit une horizontale perpendiculaire à la barre supérieure 2.

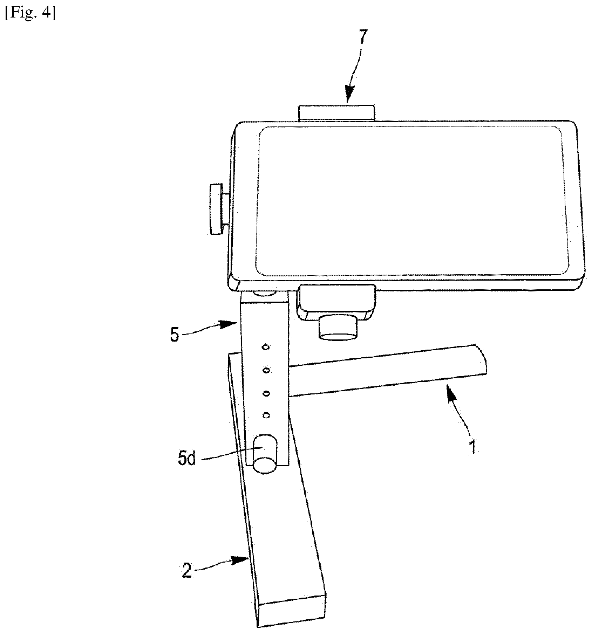

Dans un mode de réalisation représenté sur les figures 4, 5, 6 la jambe verticale 5 est constituée d'une partie femelle 5c, fixée sur la barre supérieure 2, percée à intervalle régulier de part en part de trous horizontaux de même diamètre et d'une partie mâle 5e, comportant la partie haute 5b et à la base de laquelle est taillée une encoche. Pour monter la jambe verticale 5, on passe une goupille 5d dans un trou de la partie femelle, choisi selon la hauteur de réglage voulue de la jambe verticale 5. Lorsqu'on introduit la partie mâle dans la partie femelle, par le dessus, l'encoche vient chevaucher la goupille. L'ensemble est alors fixé de manière stable et facile à démonter. Le réglage de la jambe en hauteur permet de s'adapter à la focale de la caméra du smartphone et d'améliorer la netteté de l'image.

Dans un autre mode de réalisation représenté sur la [Fig.3] la jambe verticale 5 est d'une seule pièce donc de hauteur constante. Ce mode de réalisation est adapté à des smartphones dont la focale de la caméra est réglable.

La [Fig.2] représente l'adaptateur 6 qui est la pièce principale de la partie supérieure de l'invention. L'adaptateur 6 est disposé contre la partie haute 5b. Il comporte un taraudage 6b qu'on place dans le prolongement du trou 5a. Ainsi l'adaptateur 6 peut être serré contre la partie haute 5b au moyen d'une vis à molette, facile à visser ou à dévisser à la main, qui traverse le trou 5a et se visse dans le taraudage 6b. Un joint 8, de préférence en caoutchouc, est placé entre la partie haute 5b et l'adaptateur 6.

Dans les modes de réalisation illustrés sur les figures, la partie haute 5b et l'adaptateur 6 sont des parallélépipèdes rectangles. Du fait de la forme de parallélépipède rectangle, la partie haute 5b, les faces du joint 8 et l'adaptateur 6 sont plaqués les uns contre les autres, ils présentent les uns aux autres une surface de contact maximale, ce qui renforce la liaison par serrage.

L'adaptateur est aussi percé de part en part et perpendiculairement au taraudage 6b d'un trou 6a. Le taraudage 6b n'atteint pas le trou 6a. Le trou 6a peut se retrouver en position verticale ou horizontale par rotation de l'adaptateur autour de l'axe formé par la vis de liaison de l'adaptateur avec la partie haute 5b.

Une pince 7 est disposée contre une face 6c de l'adaptateur 6 où s'ouvre le trou 6a. La pince 7 se présente sous la forme d'un étau apte à enserrer un smartphone. La pince 7 est percée d'un taraudage placé dans le prolongement du trou 6a et elle est reliée à l'adaptateur 6 au moyen d'une vis traversant le trou 6a et vissée dans le taraudage de la pince 7, facile à visser et à dévisser à la main. Un joint de préférence en caoutchouc est inséré entre la pince et l'adaptateur 6.

Dans le contexte de téléenseignement auquel l'invention est plus spécialement destinée, un élève possède un smartphone et un support selon l'invention. L'élève serre son smartphone dans la pince 7. Il connecte son smartphone à un réseau de télécommunication accessible par le smartphone et se met en relation avec un enseignant par visioconférence depuis son smartphone.

La [Fig.3] représente un mode d'utilisation de l'invention dans la situation où l'enseignant observe la copie que l'élève est en train de remplir. Le smartphone est alors placé dans un plan horizontal par une rotation convenable de l'adaptateur 6 autour de l'axe de rotation formé par la vis qui le relie à la partie haute 5b. Le trou 6a se retrouve à la verticale. Le smartphone surplombe l'angle obtus entre les deux barres inférieure 1 et supérieure 2 du socle 0. Le smartphone fonctionne alors avec la caméra située sur sa face arrière.

Si l'élève est droitier, il placera de préférence la barre inférieure 1 et le smartphone à droite de la barre supérieure 2, comme sur la [Fig.3] ; s'il est gaucher, il les placera de préférence à gauche de la barre supérieure 2, comme sur la [Fig.5]. La barre inférieure 1 empêche le support de basculer sous le poids du smartphone.

La [Fig.4] représente un mode d'utilisation de l'invention où l'élève et l'enseignant dialoguent face-à-face par l'application de visioconférence. Le smartphone est alors placé dans un plan vertical par une rotation convenable de l'adaptateur 6 autour de l'axe de rotation formé par la vis qui le relie à la partie haute 5b. On peut ensuite orienter le smartphone comme on préfère, avec la longueur dans le plan vertical (orientation « portrait » non représentée) ou dans le plan horizontal (orientation « paysage », [Fig.4]), ce qui est le principal cas d'utilisation, en faisant pivoter la pince 7 autour de sa vis de fixation avec l'adaptateur 6. Dans cette configuration le smartphone fonctionnera avec une caméra située sur la face de l'écran (comme pour les « selfies »).

L'invention peut être réalisée dans différents matériaux, chacun ayant ses avantages. Le bois permet de fabriquer le support selon l'invention avec un petit nombre d'outils banals. Le plastic permet de fabriquer le support selon l'invention en grandes séries, avec un prix de revient unitaire très bas, à condition de disposer de moules pour les pièces. L'utilisation d'autres matériaux est possible, comme un métal léger.

Le support se monte simplement de la manière suivante : on dispose une première barre 1 horizontalement, puis une deuxième barre (2) horizontalement sur la première barre, la deuxième barre (2) étant surélevée au moyen d'un pied au niveau d'une première extrémité (2a). On monte pivotante une deuxième extrémité (2b) de la deuxième barre autour d'un axe (4) sur la première barre (1).

On fixe verticalement de manière amovible sur le tiers central de la deuxième barre (2) une jambe (5), la jambe (5) étant percée de part en part d'un premier trou (5a) dans une partie haute (5b), trou qu'on place suivant une horizontale perpendiculaire à la deuxième barre (2).

On relie à la jambe (5) un adaptateur (6) percé d'un premier taraudage (6b), par un organe de vissage apte à être vissé à la main, traversant le premier trou (5a) et vissé dans le premier taraudage (6b), l'organe de vissage déterminant un axe de rotation. On monte l'adaptateur pivotant autour du dit axe de rotation sur la partie haute (5b) de la jambe verticale (5). Enfin on monte sur l'adaptateur un moyen (7) de fixation du smartphone.

Dans le cas où le moyen de fixation du smartphone est une pince ayant un fond percé d'un second taraudage, on monte la pince sur l'adaptateur (6) par un deuxième organe de vissage à la main passé dans le deuxième trou (6a), vissé dans le second taraudage et déterminant un axe de rotation autour duquel la pince est montée pivotante.

Toutes les opérations de montage peuvent être réalisées à la main.

L'usage du verbe « comporter », « comprendre » ou « inclure » et de ses formes conjuguées n'exclut pas la présence d'autres éléments ou d'autres étapes que ceux énoncés dans une revendication.

Dans les revendications, aucun signe de référence entre parenthèses ne saurait être interprété comme une limitation de la revendication.

## Revendications

1. Support pour un smartphone comprenant :
• un socle (0) comprenant deux barres disposées horizontalement,
• une barre inférieure (1) et
• une barre supérieure (2), pourvue :
• d'une première extrémité (2a) surélevée au moyen d'un pied,
• d'une deuxième extrémité (2b) montée pivotante sur la barre inférieure (1) autour d'un axe (4)
• une jambe verticale (5), fixée de manière amovible sur la barre supérieure (2) qui comprend un tiers central, la jambe verticale (5) étant fixée dans ledit tiers central, la jambe verticale (5) étant percée de part en part d'un premier trou (5a) dans une partie haute (5b), suivant une horizontale perpendiculaire à la barre supérieure (2),
• une partie supérieure comprenant :
• un adaptateur (6), percé d'un premier taraudage (6b), lequel adaptateur (6) est relié à la jambe verticale (5) par un organe de vissage apte à être vissé à la main, traversant le premier trou (5a) et vissé dans le premier taraudage (6b), l'organe de vissage déterminant un axe de rotation autour duquel l'adaptateur est monté pivotant sur la partie haute (5b) de la jambe verticale (5),
• un moyen (7) pour fixer un smartphone, monté sur l'adaptateur (6).

2. Support selon la revendication 1 où
• L'adaptateur (6) est percé de part en part d'un deuxième trou (6a) perpendiculaire au premier taraudage (6b) qui n'atteint pas le deuxième trou (6a),
• le moyen pour fixer un smartphone (7) est une pince ayant un fond percé d'un second taraudage, monté sur l'adaptateur (6) par un deuxième organe de vissage à la main passant dans le deuxième trou (6a), vissé dans le second taraudage et déterminant un axe de rotation autour duquel la pince est montée pivotante.

3. Support selon l'une quelconque des revendications précédentes où l'adaptateur (6) est un parallélépipède rectangle.

4. Support selon l'une quelconque des revendications précédentes où la partie haute (5b) est un parallélépipède rectangle.

5. Support selon l'une quelconque des revendications précédentes où un joint (8) est placé entre la partie haute (5b) et l'adaptateur (6).

6. Support selon l'une quelconque des revendications précédentes où la barre inférieure (1) est configurée pour passer sous la barre supérieure (2) en pivotant autour de l'axe (4).

7. Support selon l'une quelconque des revendications précédentes où la barre inférieure (1) a une longueur et des bords biseautés sur sa longueur.

8. Support selon l'une quelconque des revendications précédentes où la jambe verticale (5) est réglable en hauteur.

9. Support selon l'une quelconque des revendications précédentes où la jambe verticale (5) comprend
• une partie femelle (5c) fixée de manière amovible sur le socle (0) dans le tiers central de la barre supérieure (2), percée de part-en-part à intervalle régulier de trous horizontaux de même diamètre,
• une partie mâle (5e) s'emboîtant dans la partie femelle, ayant une base dans laquelle est taillée une encoche,
• une goupille (5d) configurée pour traverser un trou quelconque de la partie femelle et sur laquelle repose l'encoche.

10. Support selon l'une quelconque des revendications précédentes où le matériau du support appartient à un groupe comprenant le plastique et le bois.

11. Procédé de montage d'un support de smartphone comprenant les opérations de :
- disposer une première barre (1) horizontalement
- disposer une deuxième barre (2) horizontalement sur la première barre, la deuxième barre (2) étant surélevée au moyen d'un pied au niveau d'une première extrémité (2a)
- monter pivotante autour d'un axe (4) une deuxième extrémité (2b) de la deuxième barre sur la première barre (1)
- fixer verticalement de manière amovible sur le tiers central de la deuxième barre (2) une jambe verticale (5), la jambe verticale (5) étant percée de part en part d'un premier trou (5a) dans une partie haute (5b), trou qu'on place suivant une horizontale perpendiculaire à la deuxième barre (2),
- relier à la jambe verticale (5) un adaptateur (6) percé d'un premier taraudage (6b), par un organe de vissage apte à être vissé à la main, traversant le premier trou (5a) et vissé dans le premier taraudage (6b), l'organe de vissage déterminant un axe de rotation
- monter l'adaptateur pivotant autour du dit axe de rotation sur la partie haute (5b) de la jambe verticale (5),
- monter sur l'adaptateur un moyen (7) de fixation du smartphone.

12. Procédé de montage d'un support de smartphone selon la revendication 11 où
- L'adaptateur (6) est percé de part en part d'un deuxième trou (6a) perpendiculaire au premier taraudage (6b) qui n'atteint pas le deuxième trou (6a),
- le moyen pour fixer (7) un smartphone est une pince ayant un fond percé d'un second taraudage ; et comprenant à la fin l'opération de :
- monter la dite pince sur l'adaptateur (6) par un deuxième organe de vissage à la main passé dans le deuxième trou (6a), vissé dans le second taraudage et déterminant un axe de rotation autour duquel la pince est montée pivotante.

13. Procédé de montage d'un support de smartphone selon les revendications 11 ou 12 où les opérations de montage sont réalisées à la main.

## Patentansprüche

1. Halterung für ein Smartphone, umfassend:
• eine Basis (0) mit zwei horizontal angeordneten Stangen,
∘ eine untere Stange (1) und
∘ eine obere Stange (2), ausgestattet mit:
▪ einem ersten Ende (2a), das mit einem Fuß erhöht ist,
▪ einem zweiten Ende (2b), das drehbar an der unteren Stange (1) um eine Achse (4) montiert ist;
• ein vertikales Bein (5), das abnehmbar an der oberen Stange (2) befestigt ist, welche ein mittleres Drittel umfasst, wobei das vertikale Bein (5) in diesem mittleren Drittel befestigt ist und das vertikale Bein (5) mit einem ersten Loch (5a) in einem oberen Teil (5b) entlang einer horizontalen Linie senkrecht zur oberen Stange (2) durchbohrt ist;
• ein oberer Teil, umfassend:
∘ einen Adapter (6), der mit einem ersten Gewinde (6b) durchbohrt ist, wobei der Adapter (6) mit dem vertikalen Bein (5) über ein von Hand anziehbares Schraubelement verbunden ist, das durch das erste Loch (5a) führt und in das erste Gewinde (6b) eingeschraubt ist, wobei das Schraubelement eine Rotationsachse definiert, um die der Adapter am oberen Teil (5b) des vertikalen Beins (5) drehbar montiert ist;
∘ ein Mittel (7) zur Befestigung eines Smartphones, das am Adapter (6) montiert ist.

2. Halterung nach Anspruch 1, wobei:
• Der Adapter (6) mit einem zweiten Loch (6a) durchbohrt ist, das senkrecht zum ersten Gewinde (6b) verläuft und das zweite Loch (6a) nicht erreicht;
• Das Mittel zur Befestigung eines Smartphones (7) eine Klemme mit einer Basis ist, die mit einem zweiten Gewinde durchbohrt ist, und die am Adapter (6) über ein zweites, von Hand anziehbares Schraubelement montiert ist, das durch das zweite Loch (6a) führt, in das zweite Gewinde eingeschraubt ist und eine Rotationsachse definiert, um die die Klemme drehbar montiert ist.

3. Halterung nach einem der vorangehenden Ansprüche, wobei der Adapter (6) ein rechtwinkliges Parallelepiped ist.

4. Halterung nach einem der vorangehenden Ansprüche, wobei der obere Teil (5b) ein rechtwinkliges Parallelepiped ist.

5. Halterung nach einem der vorangehenden Ansprüche, wobei ein Gelenk (8) zwischen dem oberen Teil (5b) und dem Adapter (6) angebracht ist.

6. Halterung nach einem der vorangehenden Ansprüche, wobei die untere Stange (1) so konfiguriert ist, dass sie unter der oberen Stange (2) durch Drehen um die Achse (4) verlaufen kann.

7. Halterung nach einem der vorangehenden Ansprüche, wobei die untere Stange (1) eine Länge und abgeschrägte Kanten entlang ihrer Länge aufweist.

8. Halterung nach einem der vorangehenden Ansprüche, wobei das vertikale Bein (5) höhenverstellbar ist.

9. Halterung nach einem der vorangehenden Ansprüche, wobei das vertikale Bein (5) umfasst:
• einen weiblichen Teil (5c), der abnehmbar an der Basis (0) im mittleren Drittel der oberen Stange (2) befestigt ist, der regelmäßig in gleichen Durchmessern horizontale Löcher durchbohrt ist;
• einen männlichen Teil (5e), der in den weiblichen Teil passt, mit einer Basis, die mit einer Kerbe versehen ist;
• einen Stift (5d), der so konfiguriert ist, dass er durch eines der Löcher des weiblichen Teils führt, auf dem die Kerbe ruht.

10. Halterung nach einem der vorangehenden Ansprüche, wobei das Material der Halterung zu einer Gruppe gehört, die Kunststoff und Holz umfasst.

11. Verfahren zur Montage einer Smartphone-Halterung, umfassend die Schritte:
• Platzieren einer ersten Stange (1) horizontal;
• Platzieren einer zweiten Stange (2) horizontal auf der ersten Stange, wobei die zweite Stange (2) mit einem Fuß an einem ersten Ende (2a) erhöht wird;
• Drehbare Montage eines zweiten Endes (2b) der zweiten Stange an der ersten Stange (1) um eine Achse (4);
• Vertikale, abnehmbare Befestigung eines vertikalen Beins (5) am mittleren Drittel der zweiten Stange (2), wobei das vertikale Bein (5) mit einem ersten Loch (5a) in einem oberen Teil (5b) durchbohrt ist, wobei das Loch entlang einer horizontalen Linie senkrecht zur zweiten Stange (2) positioniert ist;
• Verbindung des vertikalen Beins (5) mit einem Adapter (6), der mit einem ersten Gewinde (6b) durchbohrt ist, über ein von Hand anziehbares Schraubelement, das durch das erste Loch (5a) führt und in das erste Gewinde (6b) eingeschraubt ist, wobei das Schraubelement eine Rotationsachse definiert,
• Drehbare Montage des Adapters um die genannte Rotationsachse am oberen Teil (5b) des vertikalen Beins (5);
• Montage eines Mittels (7) zur Befestigung des Smartphones am Adapter.

12. Verfahren zur Montage einer Smartphone-Halterung nach Anspruch 11, wobei:
• Der Adapter (6) mit einem zweiten Loch (6a) durchbohrt ist, das senkrecht zum ersten Gewinde (6b) verläuft und das zweite Loch (6a) nicht erreicht;
• Das Mittel zur Befestigung (7) des Smartphones eine Klemme mit einer Basis ist, die mit einem zweiten Gewinde durchbohrt ist; und abschließend den Schritt umfasst:
• Montage der genannten Klemme am Adapter (6) über ein zweites, von Hand anziehbares Schraubelement, das durch das zweite Loch (6a) führt, in das zweite Gewinde eingeschraubt ist und eine Rotationsachse definiert, um die die Klemme drehbar montiert ist.

13. Verfahren zur Montage einer Smartphone-Halterung nach den Ansprüchen 11 oder 12, wobei die Montagevorgänge von Hand durchgeführt werden.

## Claims

1. Support for a smartphone comprising:
• a base (0) including two horizontally arranged bars,
∘ a lower bar (1), and
∘ an upper bar (2), provided with:
▪ a first end (2a) elevated using a leg,
▪ a second end (2b) pivotably mounted on the lower bar (1) around an axis (4);
• a vertical leg (5), removably attached to the upper bar (2), which includes a central third, the vertical leg (5) being attached in said central third, the vertical leg (5) being pierced through with a first hole (5a) in an upper part (5b), along a horizontal line perpendicular to the upper bar (2);
• an upper part comprising:
∘ an adapter (6) pierced with a first thread (6b), said adapter (6) being connected to the vertical leg (5) by a screw element that can be hand-tightened, passing through the first hole (5a) and screwed into the first thread (6b), the screw element defining an axis of rotation around which the adapter is pivotably mounted on the upper part (5b) of the vertical leg (5);
∘ a means (7) for fixing a smartphone, mounted on the adapter (6).

2. Support according to claim 1 wherein:
• The adapter (6) is pierced through with a second hole (6a) perpendicular to the first thread (6b) which does not reach the second hole (6a);
• The means for fixing a smartphone (7) is a clamp with a base pierced with a second thread, mounted on the adapter (6) by a second screw element that can be hand-tightened, passing through the second hole (6a), screwed into the second thread and defining an axis of rotation around which the clamp is pivotably mounted.

3. Support according to any of the preceding claims wherein the adapter (6) is a rectangular parallelepiped.

4. Support according to any of the preceding claims wherein the upper part (5b) is a rectangular parallelepiped.

5. Support according to any of the preceding claims wherein a joint (8) is placed between the upper part (5b) and the adapter (6).

6. Support according to any of the preceding claims wherein the lower bar (1) is configured to pass beneath the upper bar (2) by pivoting around the axis (4).

7. Support according to any of the preceding claims wherein the lower bar (1) has a length and beveled edges along its length.

8. Support according to any of the preceding claims wherein the vertical leg (5) is height adjustable.

9. Support according to any of the preceding claims wherein the vertical leg (5) comprises:
• a female part (5c), removably attached to the base (0) in the central third of the upper bar (2), pierced through at regular intervals with horizontal holes of the same diameter;
• a male part (5e), fitting into the female part, having a base with a notch;
• a pin (5d) configured to pass through any hole of the female part and on which the notch rests.

10. Support according to any of the preceding claims wherein the material of the support belongs to a group comprising plastic and wood.

11. Method for assembling a smartphone support comprising the steps of:
• Placing a first bar (1) horizontally;
• Placing a second bar (2) horizontally on the first bar, the second bar (2) being elevated using a leg at a first end (2a);
• Pivotably mounting a second end (2b) of the second bar on the first bar (1) around an axis (4);
• Vertically attaching, in a removable manner, a vertical leg (5) to the central third of the second bar (2), the vertical leg (5) being pierced through with a first hole (5a) in an upper part (5b), said hole positioned along a horizontal line perpendicular to the second bar (2);
• Connecting to the vertical leg (5) an adapter (6) pierced with a first thread (6b), by a screw element that can be hand-tightened, passing through the first hole (5a) and screwed into the first thread (6b), the screw element defining an axis of rotation;
• Pivotably mounting the adapter around said axis of rotation on the upper part (5b) of the vertical leg (5);
• Mounting a means (7) for fixing the smartphone onto the adapter.

12. Method for assembling a smartphone support according to claim 11 wherein:
• The adapter (6) is pierced through with a second hole (6a) perpendicular to the first thread (6b) which does not reach the second hole (6a);
• The means for fixing (7) the smartphone is a clamp with a base pierced with a second thread; and including the final step of:
• Mounting the said clamp on the adapter (6) by a second screw element that can be hand-tightened, passing through the second hole (6a), screwed into the second thread, and defining an axis of rotation around which the clamp is pivotably mounted.

13. Method for assembling a smartphone support according to claims 11 or 12 wherein the assembly operations are carried out by hand.
